# DEMANDE DE BREVET EUROPEEN

(11) **EP 2 717 462 A1**
(43) Date de publication de la demande: **09.04.2014**
(21) Numéro de dépôt: 12187124.8
(22) Date de dépôt: 03.10.2012
(51) Int. Cl.: H02M 7/539

(54) **Procédé de régulation d'un micro-onduleur**

(71) Demandeur: Belenos Clean Power Holding AG, 2502 Bienne (CH)
(72) Inventeur: Toth, Antoine, 2800 Delémont (CH); Leuppi, Yvan, 1463 Rovray (CH)
(74) Mandataire: Giraud, Eric

(57) **Abrégé**

L'invention concerne un procédé de gestion d'un circuit électronique onduleur transformant un signal d'entrée en un signal sinusoïdal, ce circuit électronique onduleur comprenant un module onduleur (104) composé de quatre commutateurs (104a) agencés pour former deux groupes comprenant chacun un premier commutateur (A, C) et un second commutateurs (B, D) montés en série, les groupes étant parallèles entre eux, chaque commutateur étant connecté, par une de ses bornes, à une charge, ledit circuit électronique comprenant en outre un microcontrôleur agencé pour commander ledit module onduleur.

## Description

L'invention concerne un procédé de gestion d'un circuit électronique onduleur transformant un signal d'entrée en un signal sinusoïdal, ce circuit électronique onduleur comprenant un module onduleur composé de quatre commutateurs agencés pour former deux groupes comprenant chacun un premier commutateur et un second commutateurs montés en série, les groupes étant parallèles entre eux, chaque commutateur étant connecté, par une de ses bornes, à une charge, ledit circuit électronique comprenant en outre un microcontrôleur agencé pour commander ledit module onduleur.

### ARRIERE PLAN TECHNOLOGIQUE

Il est connu des systèmes électriques dont le but est de rendre un signal compatible avec un réseau électrique. Un exemple de ces systèmes électriques comprend une alimentation électrique fournissant un signal continu, la sortie de cette alimentation est connectée à un module convertisseur fournissant un signal continu. Ce signal est envoyé à un module onduleur qui va le transformer en un signal compatible avec le réseau, en l'occurrence un signal sinusoïdal. Ce module onduleur est généralement un pont en H se présentant sous la forme d'une pluralité de commutateurs disposé en H. On comprend alors que ledit pont en H comprend deux branches parallèles constituées chacune de deux commutateurs en série. Ces commutateurs peuvent être des transistors MOS ou FET. Le pont en H alimente une charge qui se trouve être la branche centrale reliant les deux branches parallèles, cette branche centrale est connectée à chaque branche au niveau du point de connexion entre les deux commutateurs. On comprendra que le pont en H comprend 4 commutateurs A, B, C et D, que les commutateurs A et B sont en série, les commutateurs C et D sont en série, les commutateurs A et B sont en parallèles des commutateurs C et D et la branche centrale portant la charge est connectée entre le point de connexion entre les commutateurs A et B et le point de connexion entre les commutateurs C et D. Les commutations peuvent être faites de sorte qu'un commutateur de chaque branche peuvent être commutés ensembles. Le pont en H est régulé par un microcontrôleur qui gère tout le système.

Dans les systèmes actuels, la régulation se fait par comparaison d'une consigne avec un signal triangulaire. Le principe utilisé consiste à commuter le circuit onduleur lorsque le signal de consigne coupe le signal triangulaire.

Or, un inconvénient de ce système est qu'il est lourd en ressources. En effet, le procédé utilisé fonctionne avec une boucle de réglage et la mesure d'un courant flottant c'est-à-dire un courant dont la référence est variable dans le temps. De ce fait, le calcul et la mesure d'un tel courant est complexe et nécessite un algorithme conséquent.

Par ailleurs, un tel procédé présente une sécurité présentant des failles. En effet, la boucle de régulation entraîne une certaine inertie. Cette inertie provoque, en cas de courts circuit, une forte augmentation du courant avant que la boucle de régulation ne puisse rétablir un courant acceptable.

### RESUME DE L'INVENTION

L'invention a pour but de pallier les inconvénients de l'art antérieur en proposant de fournir un système électronique onduleur dont la régulation est simple et permet d'obtenir un signal de sortie de meilleur qualité.

A cet effet, l'invention concerne un procédé de gestion d'un circuit électronique onduleur transformant un signal d'entrée en un signal sinusoïdal, ce circuit électronique onduleur comprenant un module onduleur composé de quatre commutateurs agencés pour former deux groupes comprenant chacun un premier commutateur et un second commutateurs montés en série, les groupes étant parallèles entre eux, chaque commutateur étant connecté, par une de ses bornes, à une charge, ledit circuit électronique comprenant en outre un microcontrôleur agencé pour commander ledit module onduleur, ledit procédé comprend les étapes suivantes :
a. Définir un courant sinusoïdal comme signal de consigne;
b. Définir un signal d'impulsion,
c. A chaque impulsion du signal d'impulsion, commuter le premier commutateur du premier groupe et le second commutateur du second groupe ou le second commutateur du premier groupe et le premier commutateur du second groupe de sorte à les fermer ;
d. Mesurer le courant circulant dans le circuit fermé formé par les commutateurs fermés;
e. Lorsque le courant mesuré est égale à la valeur du courant sinusoïdal, ouvrir les commutateurs précédemment fermés;
f. Aller à l'étape c

Dans un premier mode de réalisation avantageux, le signal d'impulsion consiste en deux signaux de même fréquence délivrant des impulsions déphasés entre eux d'une demi-période.

Dans un second mode de réalisation avantageux, l'étape e est remplacée par une étape e' consistant à, lorsque le courant mesuré est égale à la consigne du courant sinusoïdal, ouvrir les commutateurs précédemment fermés et fermés les commutateur précédemment ouverts .

Dans un second mode de réalisation avantageux, l'étape e est remplacée par une étape e" consistant à, lorsque le courant mesuré est égal à la consigne du courant sinusoïdal, n'ouvrir et ne fermer qu'un seul commutateur de chaque groupe de sorte que les premiers commutateurs du premier et second groupes soient fermés ou que les seconds commutateurs du premier et second groupes soient fermés.

Dans un autre mode de réalisation avantageux, l'étape e" est réalisée de sorte que la fermeture des premiers commutateurs du premier et second groupes et des seconds commutateurs du premier et second groupes soit alternée.

Dans un autre mode de réalisation avantageux, sur une ondulation positive du signal de consigne, l'étape c consiste à commuter le premier commutateur du premier groupe et le second commutateur du second groupe et en ce que, sur une ondulation négative du signal de consigne, l'étape c consiste à commuter le second commutateur du premier groupe et le premier commutateur du second groupe.

### BREVE DESCRIPTION DES FIGURES

Les buts, avantages et caractéristiques du système onduleur et du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement le module électronique selon l'invention
- La figure 2 représente schématiquement une variante de l'invention selon l'invention;
- Les figures 3 à 5 représente schématiquement des diagrammes de régulation du module électronique selon l'invention ;

### DESCRIPTION DETAILLEE

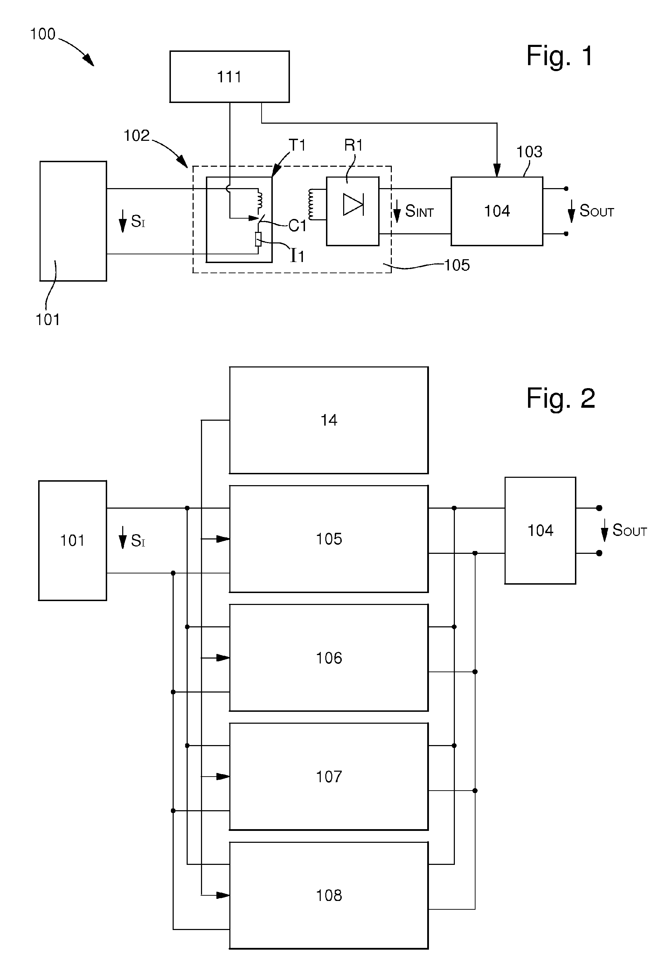

Sur la figure 1, un système électronique selon l'invention est représenté. Le système électronique est un module électrique pour adapter un premier signal S_{I} d'un premier système a un second signal Sₒᵤₜ d'un second système le premier système peut être une alimentation électrique fournissant une tension continue. Par exemple, cette alimentation électrique peut être un ou plusieurs panneaux solaires ou une ou plusieurs éoliennes ou une ou plusieurs batteries ou autres. Le second système est par exemple le réseau électrique domestique c'est-à-dire une tension sinusoïdale.

La tension continu en sortie de l'alimentation entre dans un module convertisseur 102. Ce module convertisseur comprend au moins un bloc régulateur 105. Dans une variante visible à la figure 2, il peut être prévu que le module convertisseur comprenne plusieurs bloc régulateur 106, 107 et 108 monté en parallèle par leurs sorties, en parallèle ou en série ou un mélange des deux par leurs entrées, les entrées des blocs étant flottantes.

Le bloc régulateur comprend un transformateur T1 en série avec des moyens de commutation C1. Le bloc régulateur 105 comprend en outre un moyen de mesure de courant I1 monté en série des moyens de commutations C1. Le transformateur T1, les moyens de commutation C1 et le moyen de mesure de courant I1 sont montés en parallèle du premier moyen de découplage 104. Le bloc régulateur 105 comprend également un redresseur R1 connecté en sortie du transformateur T1 pour fournir un signal intermédiaire. On comprend donc que le bloc régulateur 105 comprend son propre redresseur. Le module convertisseur comprend en outre un microcontrôleur 111. Ce microcontrôleur 111 est utilisé pour commander le bloc régulateur.

Dans le cas où le module convertisseur comprend plusieurs les blocs régulateurs 105, 106, 107 et 108, le microcontrôleur 111 commande chaque bloc régulateur 105, 106, 107 et 108 par modulation de largeur d'impulsion.

Dans une autre variante de la présente invention, il est envisageable que la commande des blocs régulateurs 105, 106, 107 et 108 soit déphasée. En effet, la commande par décalage de signal signifie qu'à chaque période de temps, un bloc régulateur est activé. Cela signifie que chaque bloc régulateur est activé une fois toutes les quatre périodes.

Or, la présente variante prévoit que les blocs régulateurs soient activés dans la même période mais déphasés. Cela signifie donc que lors de chaque période, la totalité des blocs régulateurs 105, 106, 107 et 108 sont activés de sorte qu'un seul bloc régulateur 105, 106, 107 et 108 soit actif à un instant donné.

Dans le cas présent, le décalage est d'un quart de période soit π/4 de sorte qu'à l'instant t = 0, le premier bloc régulateur 105 s'active, avec une largeur d'impulsion allant de 0 à T/4. A t = T/4, le second bloc régulateur 106 s'active. A t = T/2, le troisième bloc régulateur 107 s'active et à t = 3T/4, le quatrième bloc régulateur 108 s'active.

Cette façon de commander les blocs régulateurs permet de virtuellement augmenter la fréquence de fonctionnement. En effet, au lieu de voir une activation de blocs régulateurs 105, 106, 107 et 108 par période, on voit quatre activations par période. Plus particulièrement, ce sont les moyens de découplage qui voient une augmentation de la fréquence d'activation des blocs régulateurs 105, 106, 107 et 108.

Or, les condensateurs ont une impédance qui est dépendante de la fréquence. Par conséquent, si la fréquence augmente, il est possible de réduire la valeur du condensateur tout en gardant la même impédance. De plus, comme la taille et les coûts d'un condensateur sont liés à sa valeur en farad, une diminution de celle-ci entraîne une diminution de la taille et du prix des condensateurs des moyens de découplage sans diminuer l'efficacité de ces moyens de découplage.

Le signal intermédiaire Sint est envoyé à un module onduleur 103. Ce signal intermédiaire comprend une composante continue S_{R} c'est-à-dire un signal continu d'amplitude prédéfinie et une composante sinusoïdale S_{Q}. Ce signal intermédiaire se présente sous la forme d'un signal en demi sinus ou sinus redressé, c'est à dire que les portions sinusoïdales sont toutes positives. En d'autres termes, ce signal intermédiaire est composé d'une composante continue et d'un sinus redressé. Bien entendu ce signal pourra être purement continu.

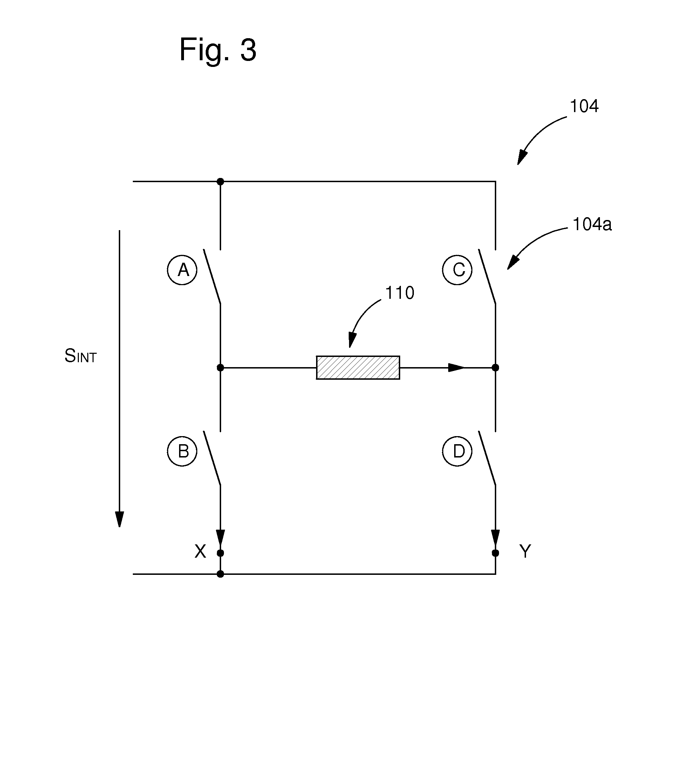

Le module onduleur 103 comprend un circuit de type pont en H 104 visible à la figure 3. Ce type de circuit se présente sous la forme d'une pluralité de commutateurs disposé en H. On comprend alors que ledit pont en H comprend deux branches parallèles constituées chacune de deux commutateurs en série. Ces commutateurs peuvent être des transistors MOS ou FET. Le pont en H alimente une charge 110 qui se trouve être la branche centrale reliant les deux branches parallèles, cette branche centrale est connectée à chaque branche au niveau du point de connexion entre les deux commutateurs. La charge constitue le second système ou le réseau externe. On comprendra que le pont en H comprend 4 commutateurs 104a appelés A, B, C et D, que les commutateurs A et B sont en série, les commutateurs C et D sont en série, les commutateurs A et B sont en parallèles des commutateurs C et D et la branche centrale portant la charge est connectée entre le point de connexion entre les commutateurs A et B et le point de connexion entre les commutateurs C et D. Les commutations peuvent être faites de sorte qu'un commutateur de chaque branche peut être commutés ensembles.

Avantageusement selon l'invention, le module onduleur présente une gestion améliorée. Pour cela, le microcontrôleur 111 qui gère la commutation du module onduleur utilise un principe de régulation utilisant des impulsions et des mesures de courant.

Les impulsions sont fournies par des signaux d'impulsions Spulse c'est-à-dire des signaux fournissant à intervalle régulier des impulsions, par exemple à 100kHz. De préférence, deux signaux déphasés de π ou 180° sont utilisés. Cette configuration permet de doubler virtuellement la fréquence de commutation soit 200kHz tout en gardant un système fonctionnant à 100kHz. Le signal d'impulsion est défini lors d'une étape b.

Dans une étape c, ce principe consiste par exemple, à une première impulsion, à commuter les commutateurs A et D de sorte que le courant dans le module onduleur augmente. Les commutateurs A et D qui étaient ouverts sont alors fermés. Ce courant est mesurée en deux endroits, au point de connexion X entre le commutateur B et la masse et au point de connexion Y entre le commutateur D et la masse.

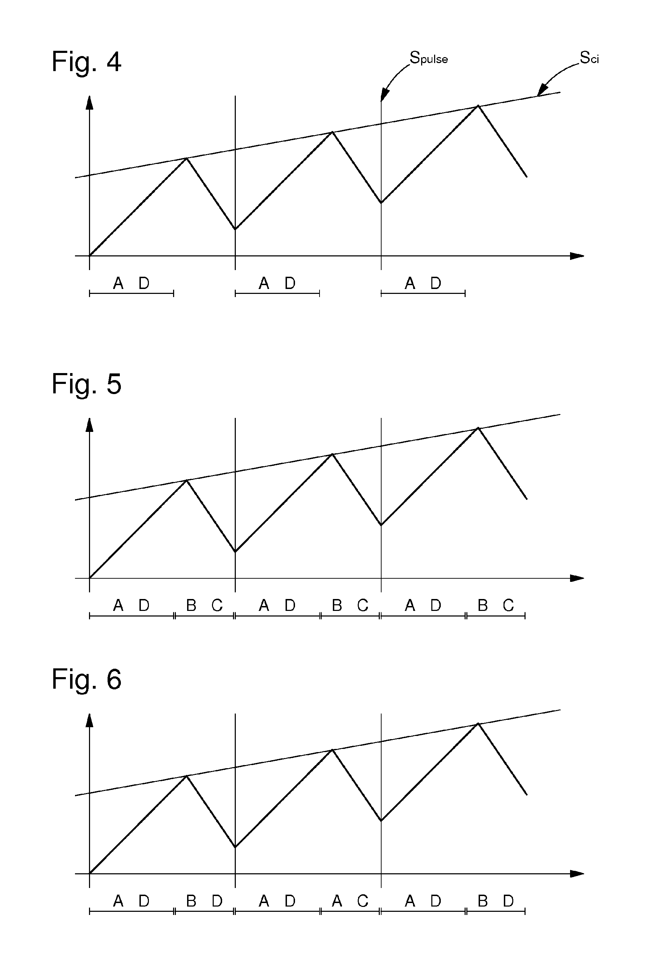

Dans ce cas-là, le courant mesuré au point de connexion Y est comparé, dans une étape d, à une consigne de courant Sci, définit lors d'une étape a, se présentant sous la forme d'une sinusoïde. Lorsque le courant mesuré au point Y atteint la valeur du courant de la consigne, un changement de commutation est réalisé lors d'une étape e. Ce changement de commutation consiste à ouvrir les commutateurs A et D. Cette commutation entraine une diminution du courant, celui-ci circulant à travers les diodes intrinsèques aux transistors faisant office de commutateurs. Lors d'une seconde impulsion, un changement de commutation est réalisé de sorte à refermer les commutateurs A et D et ainsi de suite. Cette régulation a lieu lorsqu'on se trouve sur l'ondulation positive du signal de consigne comme visible à la figure 4. Ce procédé apporte un plus en matière de sécurité car on se retrouve avec un procédé qui, à un moment donné, permet d'avoir tous les commutateurs ouverts contraignant le cour à diminuer.

Lorsque l'on se trouve sur l'ondulation négative, le procédé est inversé. Ainsi lors d'une première impulsion, les commutateurs B et C sont fermés de sorte que le courant dans le module onduleur augmente négativement c'est-à-dire que la valeur du courant est de plus en plus négative. Dans le cas présent, le courant mesuré au point de connexion X est comparé à la consigne de courant Sci. Une fois que le courant mesuré au point atteint la valeur du courant de la consigne, un changement de commutation est réalisé. Ce changement de commutation consiste à ouvrir les commutateurs B et C. Cette commutation entraine une diminution du courant. Lors d'une seconde impulsion, un changement de commutation est réalisé de sorte à refermer les commutateurs B et C et ainsi de suite.

Dans une première variante visible à la figure 5, le l'étape e du changement de commutation est modifié et s'appelle étape e'. cette étape e' consiste, lorsque le courant mesuré au point Y atteint la valeur du courant de la consigne, à ouvrir les commutateurs A et D et à fermer les commutateurs B et C. Ceci est valable lors d'une alternance positive. Dans le cas d'une alternance négative, lorsque le courant mesuré au point X atteint la valeur du courant de la consigne Sci, à ouvrir les commutateurs B et C et à fermer les commutateurs A et D.

Dans une autre variante avantageuse, les différentes commutations sont réalisées de sorte à améliorer la qualité du signal. Pour cela, le microcontrôleur 111 est agencé pour que lors d'un changement de commutation, il n'y ait qu'une seule commutation.

Pour illustrer ceci, voici un exemple dans pendant une ondulation positive de la consigne de courant. Lors d'une première impulsion, les commutateurs A et D sont fermés, les commutateurs B et C étant ouverts. Le courant mesuré au point de connexion Y est comparé à la consigne de courant Sci. Lorsque le courant mesuré au point atteint la valeur du courant de la consigne, une étape e" est réalisée dans laquelle un changement de commutation est réalisé. Lors de ce changement de commutation le commutateur D est ouvert alors que le commutateur C est fermé. Les commutateurs A et C forment alors une boucle dans laquelle le courant circule. Lors d'une seconde impulsion, un changement de commutation aura lieu. Le commutateur C est ouvert alors que le commutateur D est fermé provoquant une augmentation du courant. Une fois que ce courant atteint une valeur égale au courant de la consigne de courant Sci, un changement de commutation est effectué. Ce changement consiste à ouvrir le commutateur A et à fermer le commutateur B, Les commutateurs B et D forment alors une boucle dans laquelle le courant circule. Les courants aux points X et Y diminuent alors en conséquences jusqu'à une nouvelle impulsion entraînant un changement de commutation. Cette exemple a pour premier avantage d'avoir un signal plus propre car la fréquence de commutation visible sur le courant de phase est le double de la fréquence de commutation des branches, d'où élévation du rang des harmoniques sur le courant et réduction de leur amplitudes. Un diagramme des commutations est visible à la figure 5.

Lorsque l'on se trouve sur l'ondulation négative, le principe est le même sauf que la première impulsion voit les commutateurs B et C se fermer. Lorsque le courant mesuré au point X atteint la valeur du courant de la consigne Sci, un changement de commutation est réalisé durant lequel le commutateur D est fermé alors que le commutateur C est ouvert. Lors d'une seconde impulsion, les commutateurs B et C sont de nouveau fermés et lorsque le courant atteint la valeur de la consigne, le commutateur A est fermé alors que le commutateur B est ouvert de sorte que les commutateurs A et C soient fermés.

De plus, on obtient un circuit plus fiable car il y a une alternance des commutateurs utilisés et donc ceux-ci ont le temps de refroidir. Il en résulte une plus grande longévité des composants.

Ce procédé possède en outre l'avantage d'être plus simple car les mesures de courant sont réalisés sur des points ayant une référence fixe qui est la masse. Ces mesures sont donc plus aisées à faire que des mesures de courant sur des points flottants comme le courant de phase ou le courant de ligne. Néanmoins, faire des mesures de courant sur ces points avec une référence fixe n'empêche pas au circuit d'être capable de déterminer les courants de phase ou de ligne. On obtient alors un circuit plus simple mais pas moins complet.

Un autre avantage majeur est la sécurité du système. En effet, lorsque survient un courant de phase supérieur à la normale, par exemple en raison d'un court-circuit dans le réseau, le comparateur interrompt immédiatement l'élévation du courant, ce qui est beaucoup plus rapide que s'il doit y avoir intervention de la boucle de réglage via le microcontrôleur 111, comme c'est habituellement le cas. La sécurité des composants en est en particulier grandement améliorée.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Procédé de gestion d'un circuit électronique onduleur transformant un signal d'entrée en un signal sinusoïdal, ce circuit électronique onduleur comprenant un module onduleur (104) composé de quatre commutateurs (104a) agencés pour former deux groupes comprenant chacun un premier commutateur (A, C) et un second commutateurs (B, D) montés en série, les groupes étant parallèles entre eux, chaque commutateur étant connecté, par une de ses bornes, à une charge, ledit circuit électronique comprenant en outre un microcontrôleur agencé pour commander ledit module onduleur, ledit procédé comprend les étapes suivantes :
a. Définir un courant sinusoïdal (Sci) comme signal de consigne;
b. Définir un signal d'impulsion (Spulse),
c. A chaque impulsion du signal d'impulsion, commuter le premier commutateur (104a) du premier groupe et le second commutateur (104a) du second groupe ou le second commutateur du premier groupe et le premier commutateur du second groupe de sorte à les fermer ;
d. Mesurer le courant circulant dans le circuit fermé formé par les commutateurs fermés;
e. Lorsque le courant mesuré est égal à la valeur du courant sinusoïdal, ouvrir les commutateurs précédemment fermés;
f. Aller à l'étape c

2. Procédé de gestion d'un circuit électronique onduleur selon la revendication 1, **caractérisé en ce que** le signal d'impulsion (Spulse) consiste en deux signaux de même fréquence délivrant des impulsions à intervalles séparés déphasés entre eux d'une demi-période.

3. Procédé de gestion d'un circuit électronique onduleur selon les revendications 1 ou 2, **caractérisé en ce que** l'étape e est remplacée par une étape e' consistant à, lorsque le courant mesuré est égale à la consigne du courant sinusoïdal, ouvrir les commutateurs précédemment fermés et fermés les commutateur précédemment ouverts .

4. Procédé de gestion d'un circuit électronique onduleur selon les revendications 1 ou 2, **caractérisé en ce que** l'étape e est remplacé par une étape e" consistant à, lorsque le courant mesuré est égale à la consigne du courant sinusoïdal, n'ouvrir et ne fermer qu'un seul commutateur (104a) de chaque groupe de sorte que les premiers commutateurs du premier et second groupes soient fermés ou que les seconds commutateurs du premier et second groupes soient fermés.

5. Procédé de gestion d'un circuit électronique onduleur selon la revendication 4, **caractérisé en ce que** l'étape e' est réalisée de sorte la fermeture des premiers commutateurs du premier et second groupes et des seconds commutateurs du premier et second groupes soit alternée.

6. Procédé de gestion d'un circuit électronique onduleur selon l'une des revendication précédente, **caractérisé en ce que**, sur une ondulation positive du signal de consigne, l'étape c consiste à commuter le premier commutateur du premier groupe et le second commutateur du second groupe et **en ce que**, sur une ondulation négative du signal de consigne, l'étape c consiste à commuter le second commutateur du premier groupe et le premier commutateur du second groupe.
